# DEMANDE DE BREVET EUROPEEN

(11) **EP 4 765 029 A1**
(43) Date de publication de la demande: **24.06.2026**
(21) Numéro de dépôt: 24307206.3
(22) Date de dépôt: 19.12.2024
(51) Int. Cl.: G06T 17/00, G06T 19/20

(54) **PROCÉDÉ DE GÉNÉRATION D'UNE SCÈNE TRIDIMENSIONNELLE, PROGRAMME D'ORDINATEUR ET DISPOSITIF ASSOCIÉS**

(71) Demandeur: BULL SAS, 78340 Les Clayes-Sous-Bois (FR)
(72) Inventeur: ARNAISE, Nicolas, 38300 Bourgoin-Jallieu (FR); DEVEZE, Louis, 38600 Fontaine (FR); DRUART, Anaïs, 38100 Grenoble (FR)
(74) Mandataire: IPAZ

(57) **Abrégé**

L'invention concerne un procédé (20) de génération d'une scène tridimensionnelle, comprenant les étapes :
- pour chacun parmi au moins un objet 3D préalablement sélectionné :
• placement (26) dudit objet 3D dans un repère tridimensionnel, ledit objet 3D étant aligné avec une surface-support active de la scène tridimensionnelle, chaque surface-support active étant une surface-support orthogonale à un vecteur directeur d'un axe des altitudes du repère tridimensionnel virtuel, à une tolérance angulaire prédéterminée près ;
• mise à jour d'une carte d'occupation des surfaces-supports actives ;

- pour chaque collision détectée entre objets 3D dans le repère tridimensionnel virtuel, mise en oeuvre d'une correction (28) comprenant un déplacement d'au moins un objet 3D concerné par ladite collision en fonction de la carte d'occupation.

## Description

### Domaine technique

La présente invention concerne un procédé de génération d'une scène tridimensionnelle.

L'invention concerne également un programme d'ordinateur et un dispositif mettant en oeuvre un tel procédé.

L'invention s'applique au domaine de l'informatique, et plus précisément à la génération automatisée de scènes tridimensionnelles.

### État de la technique

Il est connu de générer des scènes tridimensionnelles, par exemple en vue de créer des images synthétiques destinées à l'entraînement de modèles d'intelligence artificielle, notamment des modèles de vision par ordinateur.

Au cours d'une telle génération, afin d'obtenir une scène réaliste, il est impératif que les objets tridimensionnels (ou « objets 3D ») présents dans la scène soient positionnés de façon cohérente entre eux, sans collision, c'est-à-dire sans qu'ils ne s'interpénètrent.

De façon classique, pour remplir un tel objectif, un opérateur importe, dans un logiciel de conception, les objets 3D désirés et les positionne manuellement en évitant les collisions entre objets 3D, tout en orientant lesdits objets de diverses façons pour augmenter le réalisme de la scène tridimensionnelle créée.

Néanmoins, un tel procédé ne donne pas entière satisfaction.

En effet, le placement manuel des objets 3D est extrêmement chronophage, requiert beaucoup de minutie et de compétences de la part de l'opérateur, et est favorable à l'occurrence de nombreuses erreurs et approximations.

Un but de la présente invention est de remédier à au moins un des inconvénients de l'état de la technique.

Un autre but de l'invention est de proposer un procédé automatisé de génération de scène tridimensionnelle qui propose un rendu réaliste tout en évitant les collisions entre objets 3D.

### Exposé de l'invention

À cet effet, l'invention concerne un procédé du type précité, le procédé étant mis en oeuvre par ordinateur et comprenant les étapes :
- à partir d'une instruction de génération comportant, pour au moins un type d'objet 3D prédéterminé, un nombre d'instances correspondant, sélection, dans une banque d'objets 3D, pour chaque type d'objet 3D, d'un nombre d'objets 3D égal au nombre d'instance,
   la banque d'objets 3D comprenant, pour chaque type d'objet 3D prédéterminé, au moins un objet 3D correspondant, et, pour chaque objet 3D :
   - au moins un vecteur d'orientation indicatif d'une orientation admissible correspondante ; et
   - pour chaque vecteur d'orientation, une surface-support correspondante, indicative d'une surface supérieure de l'objet 3D lorsque ledit objet 3D est orienté suivant ledit vecteur d'orientation ;
- pour chaque objet 3D sélectionné dans la banque d'objets 3D :
   - placement dudit objet 3D dans un repère tridimensionnel virtuel prédéterminé, ledit objet 3D étant aligné avec une surface-support active de la scène tridimensionnelle, chaque surface-support active étant une surface-support orthogonale à un vecteur directeur d'un axe des altitudes du repère tridimensionnel virtuel, à une tolérance angulaire prédéterminée près ;
   - mise à jour d'une carte d'occupation des surfaces-supports actives ;
- pour chaque collision détectée entre objets 3D dans le repère tridimensionnel virtuel, mise en oeuvre d'une correction comprenant un déplacement d'au moins un objet 3D concerné par ladite collision en fonction de la carte d'occupation.

En effet, grâce à la mise en oeuvre des surfaces-supports, en particulier des surfaces-supports actives, la scène tridimensionnelle, bien que générée de façon entièrement automatique, présente une apparence réaliste, en évitant l'agencement des objets 3D de façon qui pourrait sembler peu naturelle, voire invraisemblable, et ce de façon simple et généralisable à tous les objets 3D créés.

En outre, le recours à la carte d'occupation autorise une résolution aisée des collisions, par déplacement des objets 3D concernés par lesdites collisions sur des surfaces-supports actives aptes à recevoir lesdits objets 3D.

De façon avantageuse, le procédé selon l'invention présente une ou plusieurs des caractéristiques suivantes, prises isolément ou selon toute combinaison techniquement possible :
pour chaque objet 3D courant, l'étape de placement comprend :
   - choix aléatoire d'un vecteur d'orientation parmi l'au moins un vecteur d'orientation correspondant ;
   - choix aléatoire d'une surface-support active ;
   - orientation de l'objet 3D courant suivant le vecteur d'orientation choisi, de sorte que le vecteur d'orientation choisi soit orthogonal à la surface-support active choisie ;
   - alignement de l'objet 3D courant avec la surface-support active choisie ;
l'étape de placement comprend, en outre, une rotation aléatoire de l'objet 3D courant autour du vecteur d'orientation choisi ;
à l'issue de l'alignement de l'objet 3D courant, un axe dirigé par le vecteur directeur de l'axe des altitudes du repère tridimensionnel virtuel et passant par un centre de gravité de l'objet 3D courant coupe la surface-support active choisie ;
le centre de gravité de l'objet 3D courant est un barycentre de sommets d'un maillage dudit objet 3D ;
pour chaque collision détectée, l'étape de correction comprend, pour au moins un objet 3D concerné par la collision :
   - une recherche, à partir de la carte d'occupation, d'une surface-support active apte à recevoir ledit objet 3D sans collision ;
   - si une surface-support active apte à recevoir ledit objet 3D sans collision est trouvée, alignement de l'objet 3D avec ladite surface-support active trouvée ;
le procédé comprend, tant qu'aucune surface-support active apte à recevoir ledit objet 3D sans collision n'est trouvée, une mise en oeuvre itérative des étapes :
   - orientation de l'objet 3D suivant un autre vecteur d'orientation non testé de l'objet 3D ;
   - recherche, dans la carte d'occupation, d'une surface-support active apte à recevoir ledit objet 3D sans collision ;
le procédé comprend une suppression de l'objet 3D si aucune surface-support active apte à recevoir ledit objet 3D sans collision n'est trouvée ;
le procédé comprend, en réponse à une instruction de remplacement d'un objet 3D sélectionné, préalablement placé dans le repère tridimensionnel virtuel, un remplacement de l'objet 3D sélectionné par un nouvel objet 3D du même type, de préférence à la même position dans le repère tridimensionnel virtuel ;
le procédé comprend, en outre, en cas de détection d'une collision consécutive au remplacement de l'objet 3D sélectionné par le nouvel objet 3D, la mise en oeuvre de l'étape de correction pour corriger la collision détectée ;
le procédé comprend, en réponse à une instruction de verrouillage d'un objet 3D sélectionné préalablement placé dans le repère tridimensionnel virtuel, un verrouillage d'une position et d'une orientation dudit objet 3D sélectionné dans le repère tridimensionnel virtuel, et la génération d'une instruction de verrouillage de l'objet 3D sur lequel l'objet 3D sélectionné est aligné.

Selon un autre aspect de l'invention, il est proposé un programme d'ordinateur comprenant des instructions exécutables qui, lorsqu'elles sont exécutées par ordinateur, mettent en oeuvre les étapes du procédé tel que défini ci-dessus.

Le programme d'ordinateur peut être en tout langage informatique, tel que par exemple en langage machine, en C, C++, JAVA, Python, etc.

Selon un autre aspect de l'invention, il est proposé un dispositif informatique pour la génération d'une scène tridimensionnelle, le dispositif informatique comprenant une mémoire et une unité de traitement,
la mémoire étant configurée pour stocker une banque d'objets 3D comprenant, pour au moins un type d'objet 3D prédéterminé, au moins un objet 3D correspondant, et, pour chaque objet 3D :
   - au moins un vecteur d'orientation indicatif d'une orientation admissible correspondante ; et
   - pour chaque vecteur d'orientation, une surface-support correspondante, indicative d'une surface supérieure de l'objet 3D lorsque ledit objet 3D est orienté suivant ledit vecteur d'orientation ;
l'unité de traitement étant configurée pour :
   - à partir d'une instruction de génération comportant, pour au moins un type d'objet 3D, un nombre d'instances correspondant, sélectionner, dans la banque d'objets 3D, pour chaque type d'objet 3D, un nombre d'objets 3D égal au nombre d'instance ;
   - pour chaque objet 3D sélectionné dans la banque d'objets 3D :
      - placer ledit objet 3D dans un repère tridimensionnel virtuel prédéterminé, ledit objet 3D étant aligné avec une surface-support active de la scène tridimensionnelle, chaque surface-support active étant une surface-support orthogonale à un vecteur directeur d'un axe des altitudes du repère tridimensionnel virtuel, à une tolérance angulaire prédéterminée près ;
      - mettre à jour une carte d'occupation des surfaces-supports actives ;
   - pour chaque collision détectée entre objets 3D dans le repère tridimensionnel virtuel, mettre en oeuvre une correction comprenant un déplacement d'au moins un objet 3D concerné par ladite collision en fonction de la carte d'occupation.

Le dispositif selon l'invention peut être tout type d'appareil tel qu'un serveur, un ordinateur, une tablette, un calculateur, un processeur, une puce informatique, programmé pour mettre en oeuvre le procédé selon l'invention, par exemple en exécutant le programme d'ordinateur selon l'invention.

### Brève description des figures

L'invention sera mieux comprise à la lecture de la description qui va suivre, donnée uniquement à titre d'exemple non limitatif et faite en se référant aux dessins annexés sur lesquels :
la figure 1 est une représentation schématique d'un dispositif informatique selon l'invention ;
la figure 2 est un ordinogramme d'un procédé de génération mis en oeuvre par le dispositif de la figure 1 ;
la figure 3 est un ordinogramme détaillant une étape de placement du procédé de la figure 2 ; et
la figure 4 est un ordinogramme détaillant une étape de correction de collision du procédé de la figure 2.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

### Description détaillée

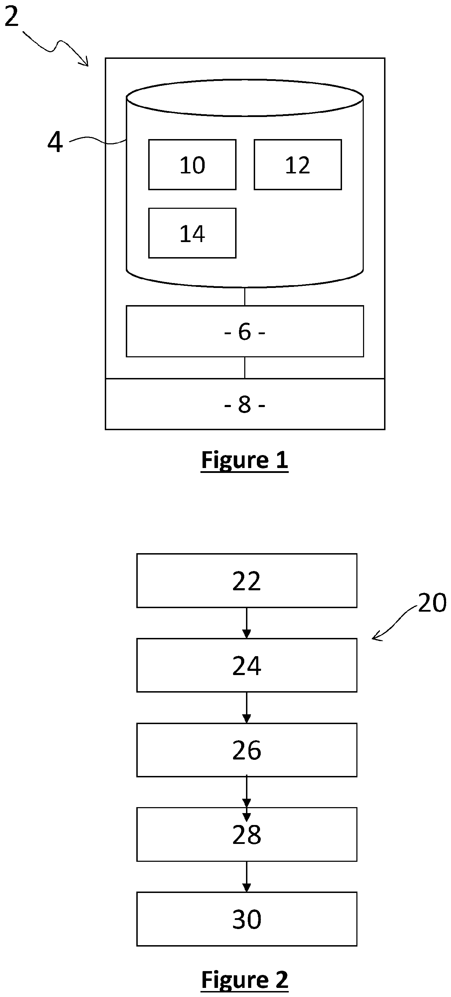

Un dispositif informatique 2 selon l'invention est illustré par la figure 1.

Le dispositif informatique 2 est destiné à générer automatiquement une scène tridimensionnelle (dite « scène 3D ») à partir d'une instruction de génération saisie par un utilisateur.

Le dispositif informatique 2 comprend une mémoire 4 et une unité de traitement 6 connectées entre elles. En outre, le dispositif informatique 2 comprend une interface utilisateur 8 pour la saisie de l'instruction de génération.

De préférence, le dispositif informatique 2 comprend, en outre, un support d'affichage 9 pour l'affichage de la scène 3D générée. Dans ce cas, l'interface utilisateur 8 est avantageusement configurée pour autoriser l'utilisateur à interagir avec la scène 3D générée, et en particulier avec des objets tridimensionnels (ou « objets 3D ») de ladite scène 3D.

### Mémoire 4

La mémoire 4 est, de préférence, configurée pour stocker un logiciel 10 de conception 3D (dit « logiciel de conception »), destiné à la manipulation d'objets 3D d'une scène 3D et/ou à la génération d'images synthétiques à partir d'une scène 3D modélisée dans ledit logiciel de conception 10.

En outre, la mémoire 4 est configurée pour stocker une banque 12 d'objets 3D (dite « banque d'objets »).

La banque d'objets 12 comprend une pluralité d'objets 3D, l'apparence de chacun étant déterminée par un maillage tridimensionnel respectif.

En outre, dans la banque d'objets 12, chaque objet 3D est associé à un type correspondant, descriptif de l'objet (c'est-à-dire indicatif de son apparence).

Par exemple, un objet 3D donné appartient au type « table », « chaise », « fauteuil », « tasse », « assiette », « voiture », etc.

De préférence, chaque type appartient à un ensemble de types, dit « catégorie », regroupant des types de nature similaire, de sorte que chaque catégorie comprend au moins un type.

Par exemple :
- les types « table », « chaise » et « fauteuil » appartiennent à la catégorie « mobilier » ;
- les types « tasse » et « assiette » appartiennent à la catégorie « vaisselle » ; et
- le type « voiture » appartient à la catégorie « véhicule ».

En outre, pour chaque objet 3D, la banque d'objets 12 comprend au moins un vecteur d'orientation correspondant. Chaque vecteur d'orientation est indicatif d'une orientation admissible correspondante de l'objet 3D. Plus précisément, pour chaque objet 3D placé dans un repère tridimensionnel virtuel donné, les orientations admissibles (c'est-à-dire acceptables) dudit objet 3D sont les orientations dans lesquelles un vecteur d'orientation correspondant est colinéaire à un vecteur directeur de l'axe des altitudes (à une tolérance angulaire prédéterminée près, par exemple ± 5°) et orienté suivant les altitudes croissantes.

Chaque orientation admissible traduit une situation dans laquelle un objet réel identique à l'objet 3D serait stable, s'il était positionné dans ladite orientation sur une surface horizontale (c'est-à-dire orthogonale à l'axe des altitudes) et s'il était soumis à la gravité. Dans ce cas, le vecteur d'orientation correspondant à ladite orientation est vertical (à la tolérance angulaire prédéterminée près), et orienté selon les altitudes croissantes (c'est-à-dire à l'opposé du vecteur gravité).

En outre, pour chaque objet 3D, et pour chaque vecteur d'orientation, la banque d'objets 12 comprend au plus une surface-support correspondante. Une telle surface-support est indicative d'une surface supérieure de l'objet 3D lorsque ledit objet 3D est orienté de sorte que le vecteur d'orientation respectif soit colinéaire à un vecteur directeur de l'axe des altitudes d'un repère tridimensionnel virtuel et présente le même sens que ledit vecteur directeur.

Chaque surface-support est une surface susceptible de porter ou non d'autres objets 3D, en fonction de l'orientation courante de l'objet 3D correspondant.

De préférence, pour chaque objet 3D, la banque d'objets 12 comprend une position d'un centre de gravité respectif.

En particulier, pour chaque objet 3D, le centre de gravité correspondant est un barycentre de sommets du maillage dudit objet 3D. En d'autres termes, une position, dans un repère local lié à l'objet 3D, du centre de gravité respectif est une moyenne pondérée des positions des sommets du maillage.

Par exemple, pour chaque sommet, le coefficient de pondération correspondant est égal à la somme des longueurs des arêtes connectées audit sommet, divisée par le nombre d'arêtes connectées audit sommet, et par la longueur moyenne des arêtes de l'objet 3D.

De préférence encore, pour chaque objet 3D, la banque d'objets 12 comprend une boîte englobante respective.

De façon classique, une telle boîte englobante est le plus petit parallélépipède rectangle aligné sur le repère local de l'objet (c'est-à-dire que chaque arête de la boîte englobante est parallèle à un axe du repère local), et contenant tous les sommets du maillage respectif.

En variante, le logiciel de conception 10 est configuré pour calculer chaque boîte englobante et/ou chaque centre de gravité à la volée, lors de la génération des objets 3D.

Avantageusement, pour une scène 3D donnée, la mémoire 4 est, en outre, configurée pour stocker une carte d'occupation correspondante. Une telle carte d'occupation est indicative, pour chaque objet 3D de ladite scène 3D donnée, pour chaque surface-support active correspondante, et à un instant donné, des parties de ladite surface-support qui sont occupées par d'autres objets 3D de la scène 3D.

Par « surface-support active », il est entendu, au sens de la présente invention, une surface-support pour laquelle, dans l'orientation courante de l'objet 3D associé, le vecteur d'orientation respectif forme, avec le vecteur directeur de l'axe des altitudes (orienté suivant les altitudes croissantes), un angle inférieur ou égal à la tolérance angulaire prédéterminée mentionnée précédemment. Il en résulte que chaque surface-support active est orthogonale audit vecteur directeur, à la tolérance angulaire prédéterminée près.

Le recours à une telle carte d'occupation est avantageux, dans la mesure où il évite la création de piles d'objets instables, susceptibles de nuire au réalisme final de la scène 3D.

À l'inverse, de préférence, les surfaces-supports inactives ne sont pas référencées dans la carte d'occupation.

### Unité de traitement 6

L'unité de traitement 6 est configurée pour mettre en oeuvre un procédé 20 de génération de scène 3D (dit « procédé de génération ») selon l'invention, décrit en référence à la figure 2.

Comme illustré par cette figure, le procédé de génération 20 comprend une étape de réception 22, une étape de sélection 24, une étape de placement 26 et une étape 28 de correction de collision (dite « étape de correction »).

De préférence, le procédé de génération 20 comprend, en outre, une étape de modification 30, postérieure à l'étape de correction 28.

Les caractéristiques de l'unité de traitement 6 ressortiront de la description qui va suivre du procédé de génération 20.

### ftape de réception 22

L'unité de traitement 6 est configurée pour au cours de l'étape de réception 22, attendre la saisie, par un utilisateur, d'une instruction de génération.

Une telle instruction de génération comporte au moins un type d'objet 3D souhaité dans la scène 3D, parmi les types d'objets 3D compris dans la banque d'objets 12.

En outre, pour chaque type d'objet 3D souhaité, l'instruction comprend un nombre d'instances correspondant, noté M (entier positif non nul), indicatif du nombre d'objets 3D dudit type que l'utilisateur souhaite voir présents dans la scène 3D.

En d'autres termes, chaque type d'objet 3D souhaité i est associé à un nombre d'instances Mᵢ correspondant, de sorte que la somme de tous les Mᵢ soit un entier positif non nul.

De préférence, une telle instruction de génération comprend également des dimensions de la scène 3D. En particulier, de telles dimensions comprennent des coordonnées indicatives des limites spatiales d'une boîte virtuelle dans laquelle tous les objets 3D de la scène 3D à générer doivent être agencés. Dans ce cas, le plan de plus basse altitude forme un sol.

De façon optionnelle, l'instruction de génération comporte également, pour au moins une face de la boîte virtuelle, une indication d'une apparence souhaitée correspondante (texture, motif, etc.).

### Etape de sélection 24

En outre, l'unité de traitement 6 est configurée de façon à, au cours de l'étape de sélection 24, sélectionner, dans la banque d'objets 12, pour chaque type d'objet 3D souhaité i renseigné par l'utilisateur, Mᵢ objets 3D.

Par exemple, pour chaque type d'objet 3D souhaité i, l'unité de traitement 6 est configurée pour réaliser Mᵢ tirages aléatoires parmi les objets 3D associés audit type dans la banque d'objets 12.

### ftape de placement 26

En outre, l'unité de traitement 6 est configurée pour, au cours de l'étape de placement 26, placer chaque objet 3D sélectionné dans un même repère tridimensionnel virtuel prédéterminé.

Plus précisément encore, l'unité de traitement 6 est configurée pour aligner chaque objet 3D sélectionné sur une surface-support active d'un autre objet 3D déjà existant dans le repère tridimensionnel virtuel.

Par « objet 3D A aligné sur une surface-support active d'un objet 3D B », il est entendu, au sens de la présente invention, que l'objet 3D A est positionné de sorte que les sommets de plus basse altitude de son maillage appartiennent à la surface-support active de l'objet 3D B, un vecteur d'orientation choisi pour l'objet 3D A étant orthogonal à la surface-support de l'objet 3D B.

De préférence, dans le cas où l'instruction de génération comprend les dimensions de la scène 3D, l'unité de traitement 6 est configurée pour d'abord générer, dans le repère tridimensionnel virtuel, la boîte virtuelle délimitant la scène 3D. Dans ce cas, l'unité de traitement 6 est configurée pour considérer le sol de la boîte virtuelle (c'est-à-dire sa face de plus basse altitude) comme une surface-support active (la boîte virtuelle formant un objet 3D).

En alternative, l'unité de traitement 6 est, par défaut, configurée de sorte que l'ensemble des objets 3D de la scène 3D générée soient agencés dans un volume limite présentant des coordonnées prédéterminées. Dans ce cas, l'unité de traitement 6 est avantageusement configurée pour considérer le plan de plus basse altitude dudit volume limite comme une surface-support active (le volume limite formant un objet 3D).

En outre, l'unité de traitement 6 est configurée pour, à l'issue du placement de chaque objet 3D courant, mettre à jour la carte d'occupation.

Plus précisément, l'unité de traitement 6 est configurée de sorte que, à l'issue de l'étape de placement 26, chaque objet soit aligné avec une surface-support active d'un autre objet 3D présent dans le repère tridimensionnel virtuel.

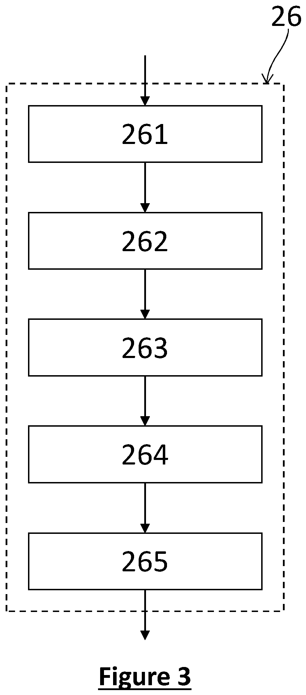

Une mise en oeuvre préférée de l'étape de placement 26 est illustrée par la figure 3.

Comme cela apparaît sur cette figure, pour réaliser un tel placement, l'unité de traitement 26 est configurée de façon à, pour chaque objet 3D sélectionné, dit « objet 3D courant », choisir aléatoirement, au cours d'une phase 261, un vecteur d'orientation parmi l'au moins un vecteur d'orientation correspondant audit objet 3D.

En outre, l'unité de traitement 6 est configurée pour choisir aléatoirement, au cours d'une phase 262, une surface-support active de la scène 3D (telle qu'une surface active d'un autre objet 3D préalablement placé dans le repère tridimensionnel virtuel, ou encore le sol de la boîte virtuelle ou le plan d'altitude la plus basse du volume limite).

L'unité de traitement 6 est également configurée pour, au cours d'une phase 263, orienter l'objet 3D courant de sorte que le vecteur d'orientation choisi correspondant soit orthogonal à la surface-support active choisie.

En outre, de préférence, l'unité de traitement 6 est configurée pour appliquer, à l'objet 3D courant, au cours d'une phase 264, une rotation aléatoire autour du vecteur d'orientation choisi.

En outre, l'unité de traitement 6 est configurée pour, au cours d'une phase 265, aligner l'objet 3D courant sur la surface-support active choisie, c'est-à-dire appliquer audit objet 3D une translation de sorte que le ou les sommets de plus basse altitude du maillage correspondant appartiennent à la surface-support active choisie.

Avantageusement, dans ce cas, l'unité de traitement 6 est configurée pour qu'à l'issue d'une telle translation, un axe dirigé par le vecteur directeur de l'axe des altitudes et passant par le centre de gravité de l'objet 3D courant coupe la surface-support choisie.

Une telle caractéristique est avantageuse, dans la mesure où elle empêche la génération de scènes 3D représentant des situations dans lesquelles un ou plusieurs objets auraient la majorité de leur « poids » dans le vide.

### Etape de correction 28

L'unité de traitement 6 est également configurée pour, au cours de l'étape de correction 28, détecter d'éventuelles collisions.

Par « collision », il est entendu, au sens de la présente invention, une situation dans laquelle les maillages (ou les boîtes englobantes) de deux objets 3D ou plus dans le repère tridimensionnel virtuel s'interpénètrent.

En outre, l'unité de traitement 6 est configurée pour corriger les collisions détectées.

En particulier, l'unité de traitement 6 est configurée de façon à déplacer, pour chaque collision détectée, au moins un objet 3D concerné par ladite collision, et ce en fonction de la carte d'occupation.

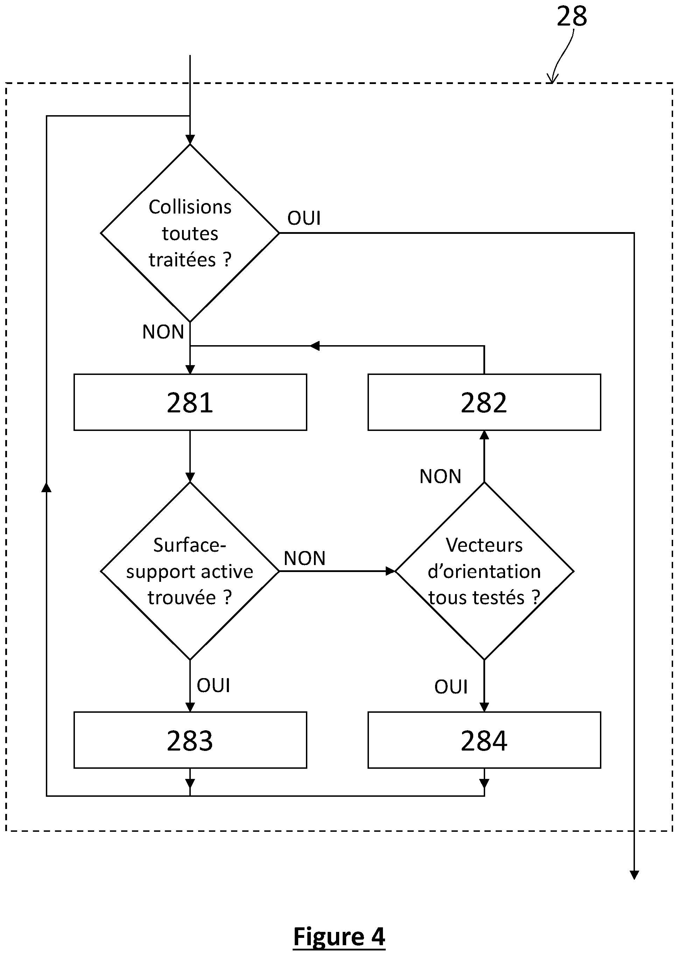

Une mise en oeuvre préférée de l'étape de correction 28 est illustrée par la figure 4.

Comme cela apparaît sur cette figure, afin de réaliser une telle correction, l'unité de traitement 6 est configurée pour mettre en oeuvre une boucle de traitement, répétée tant que les collisions dans la scène 3D n'ont pas été toutes traitées.

Plus précisément, l'unité de traitement 6 est configurée de façon à, au cours d'une phase 281, pour au moins un objet 3D concerné par une collision, dite « collision courante », rechercher, à partir de la carte d'occupation, une surface-support active apte à recevoir ledit objet 3D (c'est-à-dire une surface-support active sur laquelle ledit objet 3D est susceptible d'être aligné) sans collision.

Plus précisément encore, une telle recherche est réalisée sur les portions inoccupées des surfaces-supports actives, identifiées au moyen de la carte d'occupation.

Par exemple, pour réaliser une telle recherche, l'unité de traitement est configurée pour mettre en oeuvre un algorithme SDS (de l'anglais « *Stochastic Diffusion Search* », ou algorithme de diffusion stochastique) pour favoriser une recherche de surface-support active au voisinage de la position initiale de l'objet 3D.

De préférence, tant qu'aucune surface-support active apte à recevoir ledit objet 3D n'est trouvée, l'unité de traitement 6 est configurée pour, au cours d'une phase 282, orienter l'objet 3D suivant un autre vecteur d'orientation non testé dudit objet. En d'autres termes, l'unité de traitement 6 est configurée pour orienter l'objet 3D de sorte que le nouveau vecteur d'orientation soit colinéaire au vecteur directeur de l'axe des altitudes, et de même sens.

Dans ce cas, l'unité de traitement 6 est configurée pour effectuer une autre recherche, au cours d'une nouvelle phase 281, au moyen de la carte d'occupation, d'une surface-support active apte à recevoir ledit objet 3D orienté suivant ce nouveau vecteur d'orientation.

En outre, dans le cas où une surface-support active apte à recevoir l'objet 3D (sans causer de collision) est trouvée, l'unité de traitement 6 est configurée pour aligner, au cours d'une phase 283, l'objet 3D avec ladite surface-support active trouvée, et plus précisément aligner l'objet 3D avec ladite surface-support au niveau d'une portion de la surface-support telle qu'une collision n'est pas suscitée (par exemple, une portion présentant des dimensions supérieures à une empreinte de l'objet 3D sur la surface-support respective). Dans ce cas, la collision détectée suivante est traitée.

En outre, si aucune surface-support active apte à recevoir l'objet 3D n'est trouvée (en particulier, pour toutes les orientations admissibles testées), l'unité de traitement est configurée pour supprimer l'objet 3D, au cours d'une phase 284.

De préférence, dans ce cas, l'unité de traitement 6 est également configurée pour diffuser une alerte indicative d'une telle suppression à destination de l'utilisateur.

En outre, dans ce cas, la collision détectée suivante est traitée.

### Etape de modification 30

De préférence, l'unité de traitement 6 est configurée pour, au cours de l'étape de modification 30, commander l'affichage, sur le support d'affichage 9, de la scène 3D obtenue à l'issue de l'étape de correction 28.

De préférence encore, l'unité de traitement 6 est configurée pour autoriser l'utilisateur à interagir avec la scène 3D générée, au moyen de l'interface utilisateur 8.

Une telle interaction comprend, par exemple, un déplacement, ou encore un remplacement.

En particulier, en cas de détection de la saisie, par l'utilisateur, d'une instruction de remplacement d'un objet 3D de la scène 3D affichée, l'unité de traitement 6 est configurée pour remplacer l'objet 3D sélectionné par un nouvel objet 3D du même type, de préférence en conservant la même position dans le repère tridimensionnel virtuel.

Dans ce cas, l'unité de traitement 6 est, de préférence, configurée pour détecter l'occurrence d'une collision consécutive au remplacement de l'objet 3D sélectionné par le nouvel objet 3D. En outre, dans ce cas, l'unité de traitement 6 est, avantageusement, configurée pour émettre un signal indicatif d'une telle collision à destination de l'utilisateur (par exemple en teintant les objets 3D en collision), et/ou pour mettre en oeuvre l'étape de correction 28 afin de corriger la collision détectée.

Par exemple, en cas de détection d'une instruction de déplacement d'un objet 3D donné, l'unité de traitement 6 est configuré pour déplacer ledit objet 3D en suivant la projection d'un curseur sur la surface-support la plus proche du curseur.

Dans ce cas, l'unité de traitement 6 est, par exemple, configurée pour aligner l'objet 3D sélectionné sur ladite surface-support, en modifiant l'orientation dudit objet 3D de sorte que le vecteur d'orientation correspondant soit normal à ladite surface-support.

Une fois qu'un objet 3D et sa position conviennent à l'utilisateur, ce dernier a, par exemple, la possibilité de verrouiller ledit objet 3D afin qu'il ne soit pas affecté par d'éventuelles interactions ultérieures de l'utilisateur avec la scène 3D. Dans ce cas, de préférence, le deuxième objet 3D qui définit la surface-support sur laquelle est aligné le premier objet 3D verrouillé est également verrouillé récursivement.

En d'autres termes, en réponse à une instruction de verrouillage d'un objet 3D sélectionné préalablement placé dans le repère tridimensionnel virtuel, l'unité de traitement 6 est configurée pour verrouiller (c'est-à-dire fixer) une position, ainsi qu'une orientation (c'est-à-dire la direction et le sens du vecteur d'orientation dans le repère tridimensionnel virtuel), dudit objet 3D sélectionné dans le repère tridimensionnel virtuel, et, de préférence, sa rotation autour du vecteur d'orientation. En outre, l'unité de traitement 6 est configurée pour générer une instruction de verrouillage de l'objet 3D sur lequel l'objet 3D sélectionné est aligné.

Puis, une fois la scène 3D prête, l'utilisateur peut y placer les caméras qu'il souhaite et exporter la simulation voulue.

### Fonctionnement

Au cours de l'étape de réception 22, l'unité de traitement 6 attend la saisie, par l'utilisateur, de l'instruction de génération.

Puis, à l'issue de la saisie de l'instruction de génération, l'unité de traitement 6 sélectionne, au cours de l'étape de sélection 24, dans la banque d'objets 12, pour chaque type d'objet 3D souhaité i renseigné par l'utilisateur, Mᵢ objets 3D.

Puis, au cours de l'étape de placement 26, l'unité de traitement 6 place chaque objet 3D sélectionné dans le même repère tridimensionnel virtuel.

Plus précisément encore, l'unité de traitement 6 aligne chaque objet 3D sélectionné sur une surface-support active existant dans le repère tridimensionnel virtuel.

En outre, à l'issue du placement de chaque objet 3D courant, l'unité de traitement 6 met à jour la carte d'occupation.

Il en résulte qu'à l'issue de l'étape de placement 26, chaque objet 3D est aligné avec une surface-support active d'un autre objet 3D (dont le sol, le cas échéant) présent dans le repère tridimensionnel virtuel.

Par exemple, pour réaliser un tel placement, pour chaque objet 3D courant, l'unité de traitement 26 choisit aléatoirement, au cours de la phase 261, un vecteur d'orientation parmi l'au moins un vecteur d'orientation correspondant audit objet 3D.

Puis, au cours de la phase 262, l'unité de traitement 6 choisit aléatoirement, une surface-support active de la scène 3D.

Puis, au cours d'une phase 263, l'unité de traitement 6 oriente l'objet 3D courant de sorte que le vecteur d'orientation choisi soit orthogonal à la surface-support active choisie.

De préférence, au cours de la phase 264, l'unité de traitement 6 applique, à l'objet 3D courant, une rotation aléatoire autour du vecteur d'orientation choisi.

Puis, au cours de la phase 265, l'unité de traitement 6 aligne l'objet 3D courant sur la surface-support active choisie.

Puis, au cours de l'étape de correction 28, l'unité de traitement 6 détecte les éventuelles collisions.

Dans ce cas, l'unité de traitement 6 déplace, pour chaque collision détectée, au moins un objet 3D concerné par ladite collision, et ce en fonction de la carte d'occupation.

En outre, l'unité de traitement 6 est configurée pour corriger les collisions détectées.

Par exemple, pour réaliser une telle correction, l'unité de traitement 6 répète la boucle de traitement de traitement illustrée par la figure 4, tant que les collisions dans la scène 3D n'ont pas été toutes traitées.

Plus précisément, au cours d'une phase 281, pour au moins un objet 3D concerné par la collision courante, l'unité de traitement 6 recherche, à partir de la carte d'occupation, une surface-support active apte à recevoir ledit objet 3D sans collision.

De préférence, tant qu'aucune surface-support active apte à recevoir ledit objet 3D n'est trouvée, l'unité de traitement 6 oriente, au cours de la phase 282, l'objet 3D suivant un autre vecteur d'orientation non testé.

Puis, l'unité de traitement 6 effectue une autre recherche, au moyen de la carte d'occupation, et au cours d'une nouvelle phase 281, d'une surface-support active apte à recevoir ledit objet 3D orienté suivant ce nouveau vecteur d'orientation, sans causer de collision.

Puis, si une surface-support active apte à recevoir l'objet 3D (sans causer de collision) est trouvée, l'unité de traitement 6 aligne, au cours de la phase 283, l'objet 3D avec ladite surface-support active trouvée. La collision détectée suivante est ensuite traitée.

En outre, si aucune surface-support active apte à recevoir l'objet 3D n'est trouvée, l'unité de traitement 6 supprime l'objet 3D, au cours de la phase 284. La collision détectée suivante est ensuite traitée.

De préférence, au cours de l'étape de modification 30, l'unité de traitement 6 commande l'affichage, sur le support d'affichage 9, de la scène 3D obtenue à l'issue de l'étape de correction 28.

En cas de détection de la saisie, par l'utilisateur, d'une instruction de remplacement d'un objet 3D de la scène 3D affichée, l'unité de traitement 6 remplace l'objet 3D sélectionné par un autre objet 3D du même type, de préférence en conservant la même position dans le repère tridimensionnel virtuel.

Dans ce cas, si l'unité de traitement 6 détecte l'occurrence d'une collision consécutive au remplacement de l'objet 3D sélectionné par le nouvel objet 3D, l'unité de traitement 6 met en oeuvre l'étape de correction 28 afin de corriger la collision détectée.

En outre, en cas de détection d'une instruction de déplacement d'un objet 3D donné, l'unité de traitement 6 déplace ledit objet 3D en suivant la projection d'un curseur sur la surface-support la plus proche du curseur. Dans ce cas, l'unité de traitement 6 aligne l'objet 3D sélectionné sur ladite surface-support.

Une fois que l'objet 3D et sa position conviennent à l'utilisateur, ce dernier a, par exemple, la possibilité de verrouiller ledit objet 3D afin qu'il ne soit pas affecté par d'éventuelles interactions ultérieures de l'utilisateur avec la scène 3D. Dans ce cas, de préférence, le deuxième objet 3D qui définit la surface-support sur laquelle est aligné le premier objet 3D verrouillé est également verrouillé récursivement.

Puis, une fois la scène 3D prête, l'utilisateur peut y placer les caméras qu'il souhaite et exporter la simulation voulue.

Bien entendu l'invention n'est pas limitée aux exemples qui viennent d'être décrits.

## Revendications

1. Procédé (20) de génération d'une scène tridimensionnelle, le procédé étant mis en oeuvre par ordinateur et comprenant les étapes :
- à partir d'une instruction de génération comportant, pour au moins un type d'objet 3D prédéterminé, un nombre d'instances correspondant, sélection (24), dans une banque d'objets 3D (12), pour chaque type d'objet 3D, d'un nombre d'objets 3D égal au nombre d'instance,
la banque d'objets 3D (12) comprenant, pour chaque type d'objet 3D prédéterminé, au moins un objet 3D correspondant, et, pour chaque objet 3D :
• au moins un vecteur d'orientation indicatif d'une orientation admissible correspondante ; et
• pour chaque vecteur d'orientation, une surface-support correspondante, indicative d'une surface supérieure de l'objet 3D lorsque ledit objet 3D est orienté suivant ledit vecteur d'orientation ;
- pour chaque objet 3D sélectionné dans la banque d'objets 3D (12) :
• placement (26) dudit objet 3D dans un repère tridimensionnel virtuel prédéterminé, ledit objet 3D étant aligné avec une surface-support active de la scène tridimensionnelle, chaque surface-support active étant une surface-support orthogonale à un vecteur directeur d'un axe des altitudes du repère tridimensionnel virtuel, à une tolérance angulaire prédéterminée près ;
• mise à jour d'une carte d'occupation des surfaces-supports actives ;
- pour chaque collision détectée entre objets 3D dans le repère tridimensionnel virtuel, mise en oeuvre d'une correction (28) comprenant un déplacement d'au moins un objet 3D concerné par ladite collision en fonction de la carte d'occupation.

2. Procédé selon la revendication 1, dans lequel, pour chaque objet 3D courant, l'étape de placement (26) comprend :
- choix aléatoire (261) d'un vecteur d'orientation parmi l'au moins un vecteur d'orientation correspondant ;
- choix aléatoire (262) d'une surface-support active ;
- orientation (263) de l'objet 3D courant suivant le vecteur d'orientation choisi, de sorte que le vecteur d'orientation choisi soit orthogonal à la surface-support active choisie ;
- alignement (265) de l'objet 3D courant avec la surface-support active choisie.

3. Procédé selon la revendication 2, dans lequel l'étape de placement (26) comprend, en outre, une rotation aléatoire (264) de l'objet 3D courant autour du vecteur d'orientation choisi.

4. Procédé selon la revendication 2 ou 3, dans lequel, à l'issue de l'alignement de l'objet 3D courant, un axe dirigé par le vecteur directeur de l'axe des altitudes du repère tridimensionnel virtuel et passant par un centre de gravité de l'objet 3D courant coupe la surface-support active choisie.

5. Procédé selon la revendication 4, dans lequel le centre de gravité de l'objet 3D courant est un barycentre de sommets d'un maillage dudit objet 3D.

6. Procédé selon l'une quelconque des revendications 1 à 5, dans lequel, pour chaque collision détectée, l'étape de correction (28) comprend, pour au moins un objet 3D concerné par la collision :
- une recherche (281), à partir de la carte d'occupation, d'une surface-support active apte à recevoir ledit objet 3D sans collision ;
- si une surface-support active apte à recevoir ledit objet 3D sans collision est trouvée, alignement (283) de l'objet 3D avec ladite surface-support active trouvée.

7. Procédé selon la revendication 6, comprenant, tant qu'aucune surface-support active apte à recevoir ledit objet 3D sans collision n'est trouvée, une mise en oeuvre itérative des étapes :
- orientation (282) de l'objet 3D suivant un autre vecteur d'orientation non testé de l'objet 3D ;
- recherche (281), dans la carte d'occupation, d'une surface-support active apte à recevoir ledit objet 3D sans collision.

8. Procédé selon la revendication 6 ou 7, comprenant une suppression (284) de l'objet 3D si aucune surface-support active apte à recevoir ledit objet 3D sans collision n'est trouvée.

9. Procédé selon l'une quelconque des revendications 1 à 8, comprenant, en réponse à une instruction de remplacement d'un objet 3D sélectionné, préalablement placé dans le repère tridimensionnel virtuel, un remplacement de l'objet 3D sélectionné par un nouvel objet 3D du même type, de préférence à la même position dans le repère tridimensionnel virtuel.

10. Procédé selon la revendication 9, comprenant, en outre, en cas de détection d'une collision consécutive au remplacement de l'objet 3D sélectionné par le nouvel objet 3D, la mise en oeuvre de l'étape de correction (28) pour corriger la collision détectée.

11. Procédé selon l'une quelconque des revendications 1 à 10, comprenant, en réponse à une instruction de verrouillage d'un objet 3D sélectionné préalablement placé dans le repère tridimensionnel virtuel, un verrouillage d'une position et d'une orientation dudit objet 3D sélectionné dans le repère tridimensionnel virtuel, et la génération d'une instruction de verrouillage de l'objet 3D sur lequel l'objet 3D sélectionné est aligné.

12. Programme d'ordinateur comprenant des instructions exécutables qui, lorsqu'elles sont exécutées par ordinateur, mettent en en oeuvre les étapes du procédé selon l'une quelconque des revendications 1 à 11.

13. Dispositif informatique (2) pour la génération d'une scène tridimensionnelle, le dispositif informatique (2) comprenant une mémoire (4) et une unité de traitement (6),
la mémoire (4) étant configurée pour stocker une banque d'objets 3D (12) comprenant, pour au moins un type d'objet 3D prédéterminé, au moins un objet 3D correspondant, et, pour chaque objet 3D :
- au moins un vecteur d'orientation indicatif d'une orientation admissible correspondante ; et
- pour chaque vecteur d'orientation, une surface-support correspondante, indicative d'une surface supérieure de l'objet 3D lorsque ledit objet 3D est orienté suivant ledit vecteur d'orientation ;
l'unité de traitement (6) étant configurée pour :
- à partir d'une instruction de génération comportant, pour au moins un type d'objet 3D, un nombre d'instances correspondant, sélectionner, dans la banque d'objets 3D (12), pour chaque type d'objet 3D, un nombre d'objets 3D égal au nombre d'instance ;
- pour chaque objet 3D sélectionné dans la banque d'objets 3D (12) :
• placer ledit objet 3D dans un repère tridimensionnel virtuel prédéterminé, ledit objet 3D étant aligné avec une surface-support active de la scène tridimensionnelle, chaque surface-support active étant une surface-support orthogonale à un vecteur directeur d'un axe des altitudes du repère tridimensionnel virtuel, à une tolérance angulaire prédéterminée près ;
• mettre à jour une carte d'occupation des surfaces-supports actives ;
- pour chaque collision détectée entre objets 3D dans le repère tridimensionnel virtuel, mettre en oeuvre une correction comprenant un déplacement d'au moins un objet 3D concerné par ladite collision en fonction de la carte d'occupation.
